# EUROPEAN PATENT APPLICATION

(11) **EP 2 708 835 A1**
(43) Date of publication of application: **19.03.2014**
(21) Application number: 12782922.4
(22) Date of filing: 08.05.2012
(51) Int. Cl.: F25D 19/00, F04B 39/00

(54) **REFRIGERATOR**

(30) Priority: 09.05.2011 JP 2011103991; 09.05.2011 JP 2011103992
(71) Applicant: Panasonic Corporation, Kadoma-shi, Osaka 571-8501 (JP)
(72) Inventor: NISHIHATA, Hideo, Osaka-shi, Osaka 540-6207 (JP)
(74) Representative: Eisenführ Speiser
(86) International application number: PCT/JP2012/003000
(87) International publication number: WO 2012/153518

(57) **Abstract**

A refrigerator of the present invention includes a box body, a compressor and an operation controller. A storage compartment provided at its front surface with a door is disposed in the box body. A hermetic container includes an upper container and a lower container. The compressor includes an electric element having a stator and a rotor, and a compressing element driven by the electric element. The electric element and the compressing element are accommodated in the hermetic container. The operation controller controls torque of the compressor or controls stop of the compressor. A plurality of legs fixed to the lower container are disposed on the box body through an elastic member. The elastic member is disposed on a plurality of substantially cylindrical pins provided on a surface of a compressor installation surface of the box body.

## Description

### TECHNICAL FIELD

The present invention relates to a refrigerator which reduces vibration of a compressor.

### BACKGROUND ART

In conventional refrigerators, it is general that a machine compartment is disposed on a lower and rear portion in a refrigerator body and a high pressure-side structure of a refrigeration cycle such as a compressor is accommodated in the machine compartment. In recent years, from a standpoint of usability and space-saving, the refrigerator is required to enhance accommodating performance. From a standpoint of global environment, the refrigerator is also required to enhance energy-saving performance. To meet these requirements, according to the conventional refrigerators, the machine compartment is disposed on a top surface of the refrigerator body and on an upper portion of a back surface of the refrigerator body in a storage compartment where usability is poor, thereby enhancing the usability. Further, the machine compartment whose temperature is prone to rise by the compressor having a high temperature is configured on the top surface to enhance heat-radiation performance, thereby saving energy (see PTL 1 for example).

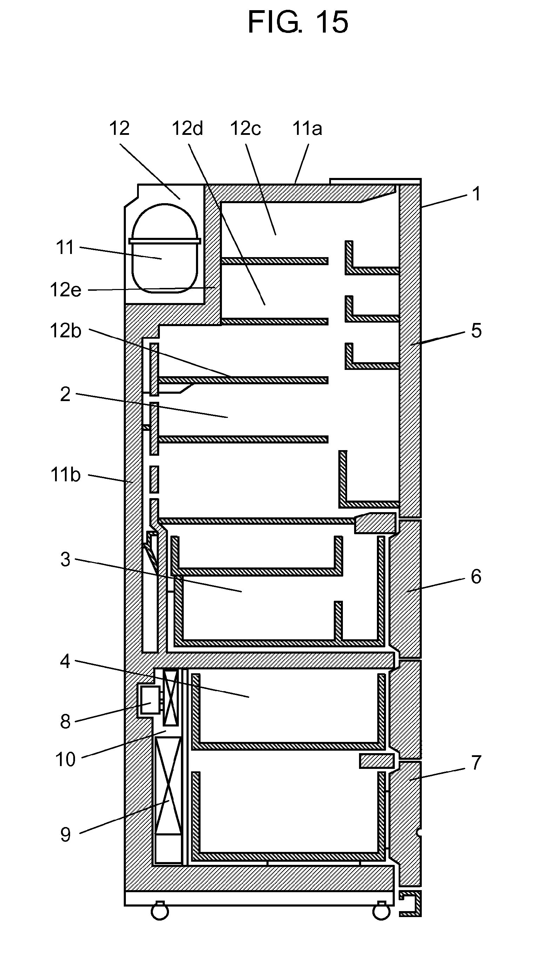

FIG. 15 is a schematic sectional view showing a configuration of a conventional refrigerator described in PTL 1.

Box body 1 of the refrigerator is composed of refrigerating compartment 2, vegetable compartment 3 and freezing compartment 4 from above. Refrigerating compartment 2 includes refrigerating compartment pivoted door 5. Vegetable compartment 3 includes vegetable compartment pull-out door 6. Freezing compartment 4 includes freezing compartment pull-out door 7.

Cooling unit 10 composed of refrigerator fan 8 and evaporator 9 is disposed on a rear portion of a back surface of freezing compartment 4 forming an accommodating section as a lowermost storage compartment. Cooling unit 10 has substantially the same height as that of an opening of freezing compartment 4. Compressor 11 is disposed in concave portion 12 which is dented toward refrigerating compartment 2 such that refrigerating compartment 2 extends between top surface 11a and back surface 11b of box body 1 of the refrigerator where usability is poor.

Refrigerating compartment 2 is provided with plurality of shelves 12b for accommodating food and the like. Concave portion 12 provided in an upper portion of a back surface of box body 1 protrudes as convex portion 12e. Concave portion 12 extends between uppermost accommodating space 12c and second accommodating space 12d which are divided by uppermost shelf 12b.

In such a configuration, as box body 1 of compressor 11 moves toward top surface 11a, heights of freezing compartment 4 and vegetable compartment 3 become lower by an accommodating volume of compressor 11. Hence, a position of a dividing wall which divides refrigerating compartment 2 and vegetable compartment 3 from each other can be lowered, and it becomes easy to take out accommodated food or the like in vegetable compartment 3.

However, according to the conventional configuration, the appearance of convex portion 12e existing at an upper corner portion of the refrigerator is poor in terms of design, and accommodating performance is also deteriorated. To make convex portion 12e small and to enhance the accommodating performance as much as possible, it is necessary to lower concave portion 12. Hence, it is necessary to lower the height of compressor 11 which is the greatest factor for determining a height of concave portion 12.

To reduce, as much as possible, the height of concave portion 12 in which compressor 11 is disposed, a horizontal rotary compressor having a rotary compressor mechanism can be effective means if a type and a configuration of compressor 11 are taken into consideration.

In the case of the rotary compressor, however, to reduce the compressor in size, a machine section is generally fixed directly to an inner surface of a compressor shell which is a container. Hence, vibration generated when the compressor is operated is prone to be propagated to outside.

In the case of a refrigerator which is disposed on an upper portion of the compressor having concern about propagation of vibration to box body 1 of the refrigerator, a position of compressor 11 comes closer to ears of a user as compared with a conventional refrigerator which is disposed on a lower portion of the compressor. Hence, vibration of compressor 11 and a resonance caused by propagation of vibration are prone to be unpleasant for a user. As described above, there is a problem that it is difficult to enhance usability and an outward appearance which are deteriorated if the compressor is disposed in a lower space, and it is difficult to reduce vibration and noise.

### Citation List

### Patent Literature

PTL 1: Unexamined Japanese Patent Publication No.H11-183014

### SUMMARY OF THE INVENTION

A refrigerator of the present invention includes a box body, a compressor and an operation controller. A storage compartment provided with a door at a front side is disposed in the box body. A hermetic container includes an upper container and a lower container. The compressor includes an electric element having a stator and a rotor, and a compressing element driven by the electric element. The electric element and the compressing element are accommodated in the hermetic container. The operation controller controls torque of the compressor or controls stop of the compressor. A plurality of legs fixed to the lower container are disposed on the box body through an elastic member. The elastic member is disposed on a plurality of substantially cylindrical pins provided on a surface of a compressor installation surface of the box body.

According to this configuration, since vibration generated at the time of steady operation or stop of the compressor is suppressed, it is possible to enhance reliability and durability of the compressor and elastic member and pipes which are peripheral members of the compressor. As a result, it is possible to provide a high-quality refrigerator having low noise and small vibration.

### BRIEF DESCRIPTION OF DRAWINGS

FIG. 1 is a schematic sectional view of a refrigerator in a first embodiment of the present invention.
FIG. 2 is a schematic rear view of the refrigerator in the first embodiment of the present invention.
FIG. 3 is a schematic part exploded view of the refrigerator in the first embodiment of the present invention.
FIG. 4 is a vertical sectional view of a compressor of the refrigerator in the first embodiment of the present invention.
FIG. 5 is a horizontal sectional view of the compressor of the refrigerator in the first embodiment of the present invention.
FIG. 6 is a perspective view of a leg portion of the compressor of the refrigerator in the first embodiment of the present invention.
FIG. 7 is a circuit diagram of an operation controller of the compressor of the refrigerator in the first embodiment of the present invention.
FIG. 8 is a diagram showing an algorithm of duty correction at the time of torque control of the compressor of the refrigerator in the first embodiment of the present invention.
FIG. 9A is a vibration characteristic diagram at the time of a steady operation of the compressor of the refrigerator in the first embodiment of the present invention.
FIG. 9B is a vibration characteristic diagram at the time of the steady operation of the compressor of the refrigerator in the first embodiment of the present invention.
FIG. 9C is a vibration characteristic diagram at the time of the steady operation of the compressor of the refrigerator in the first embodiment of the present invention.
FIG. 10A is a vibration characteristic diagram at the time of stop of the compressor of the refrigerator in the first embodiment of the present invention.
FIG. 10B is a vibration characteristic diagram at the time of stop of the compressor of the refrigerator in the first embodiment of the present invention.
FIG. 10C is a vibration characteristic diagram at the time of stop of the compressor of the refrigerator in the first embodiment of the present invention.
FIG. 10D is a vibration characteristic diagram at the time of stop of the compressor of the refrigerator in the first embodiment of the present invention.
FIG. 11 is a vertical sectional view of peripheries of an elastic member of the refrigerator in the first embodiment of the present invention.
FIG. 12 is a vertical sectional view of the peripheries of the elastic member of the refrigerator in the first embodiment of the present invention.
FIG. 13 is a vertical sectional view of peripheries of an elastic member of a refrigerator in a second embodiment of the present invention.
FIG. 14 is a vertical sectional view of the peripheries of the elastic member of the refrigerator in the second embodiment of the present invention.
FIG. 15 is a schematic sectional view showing a configuration of a conventional refrigerator.

### DESCRIPTION OF EMBODIMENTS

Embodiments of a refrigerator according to the present invention will be described below with reference to the drawings. The present invention is not limited by the embodiments.

### (First Embodiment)

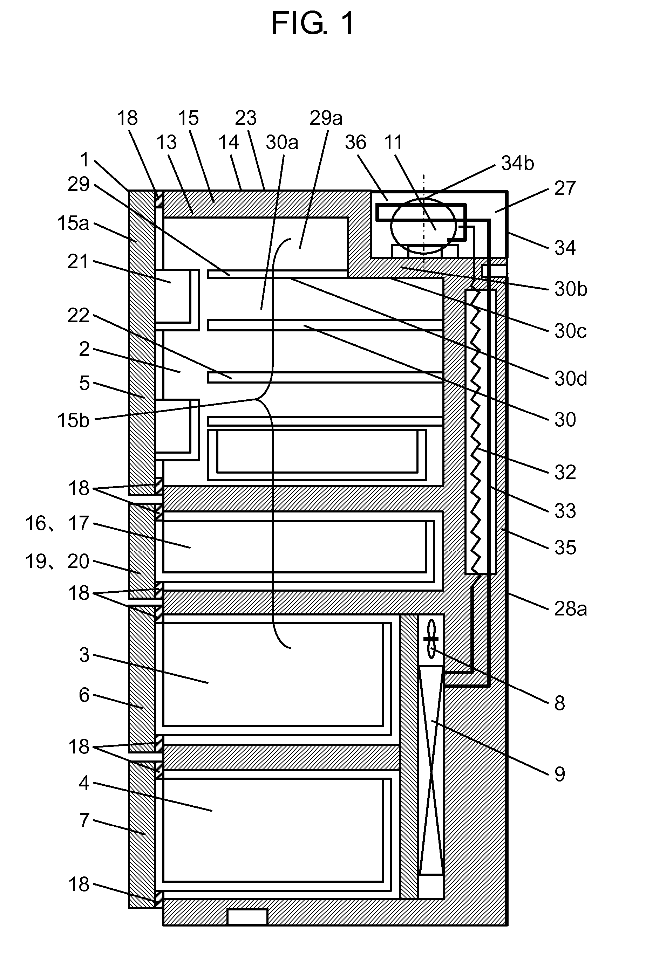

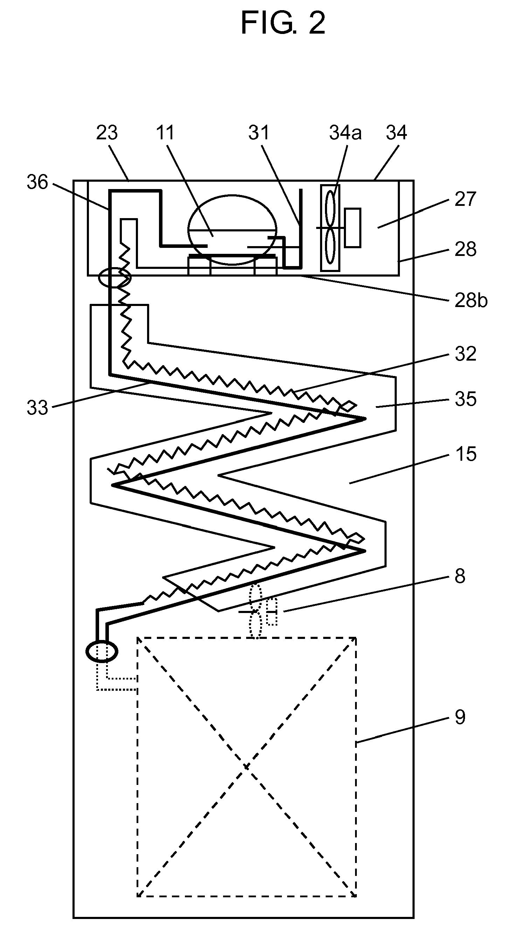

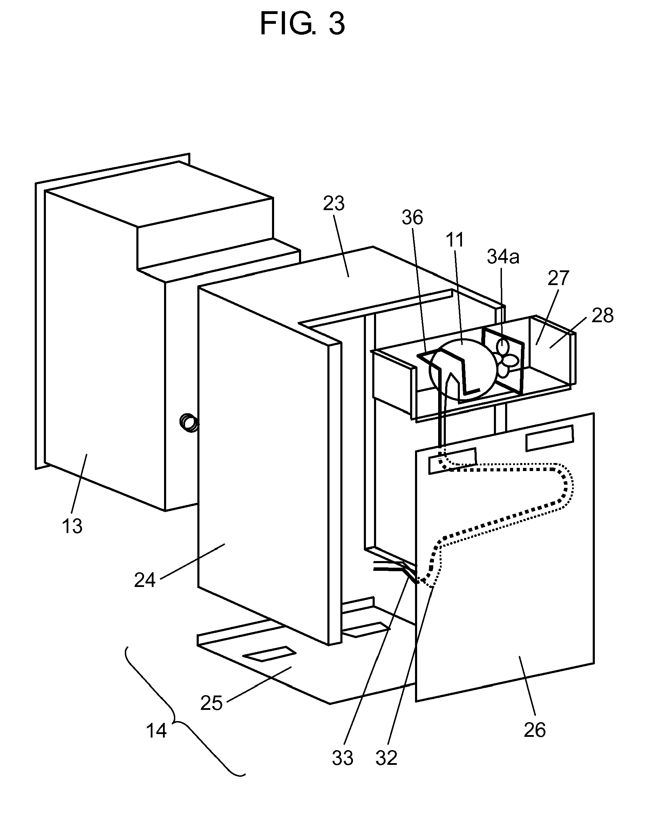

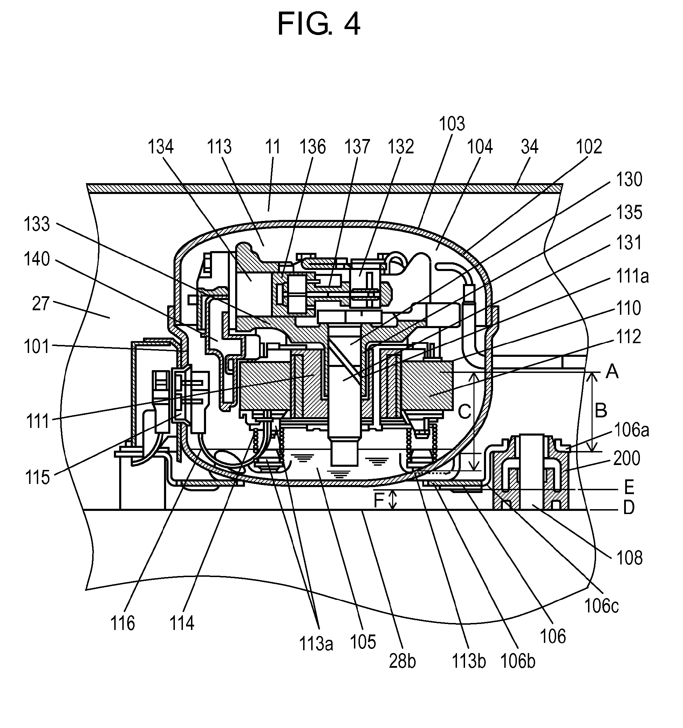

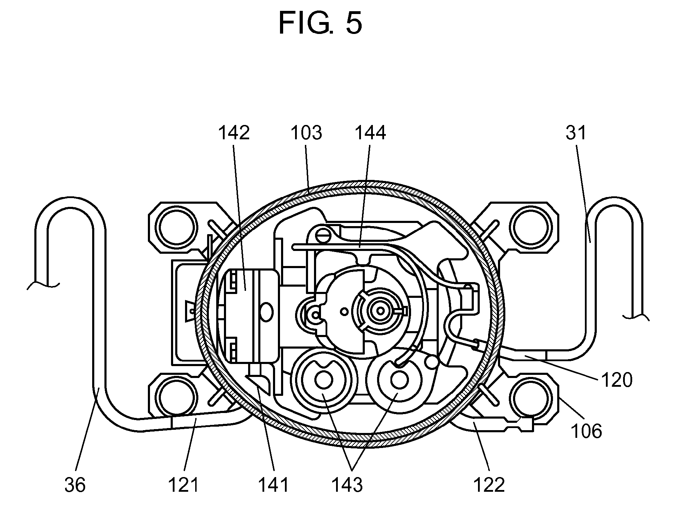

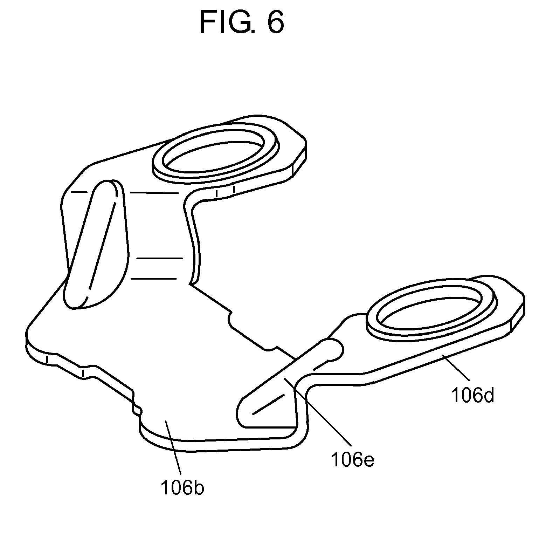

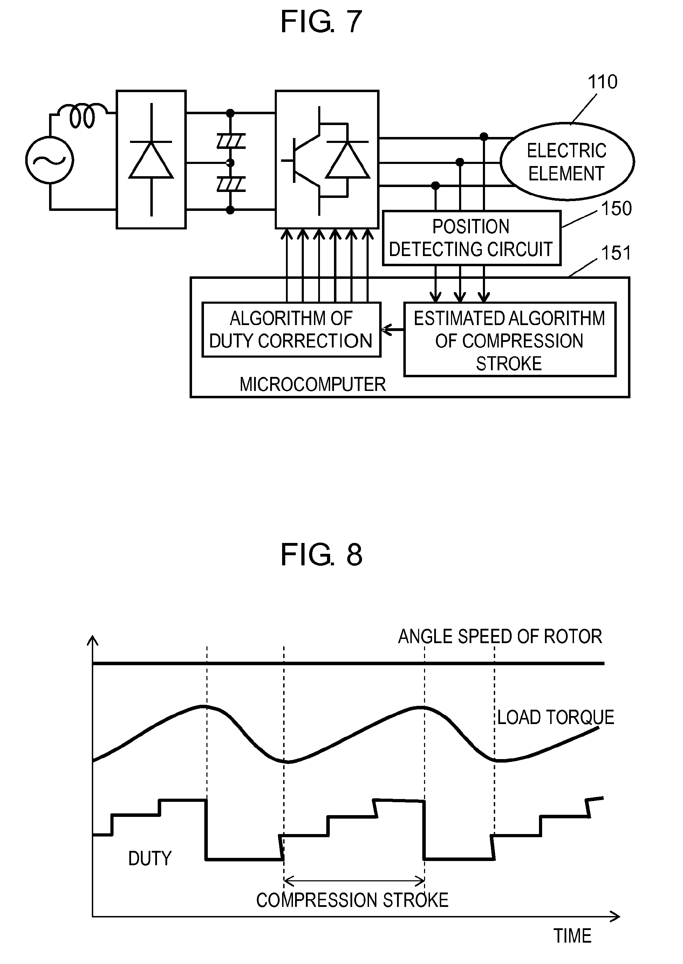

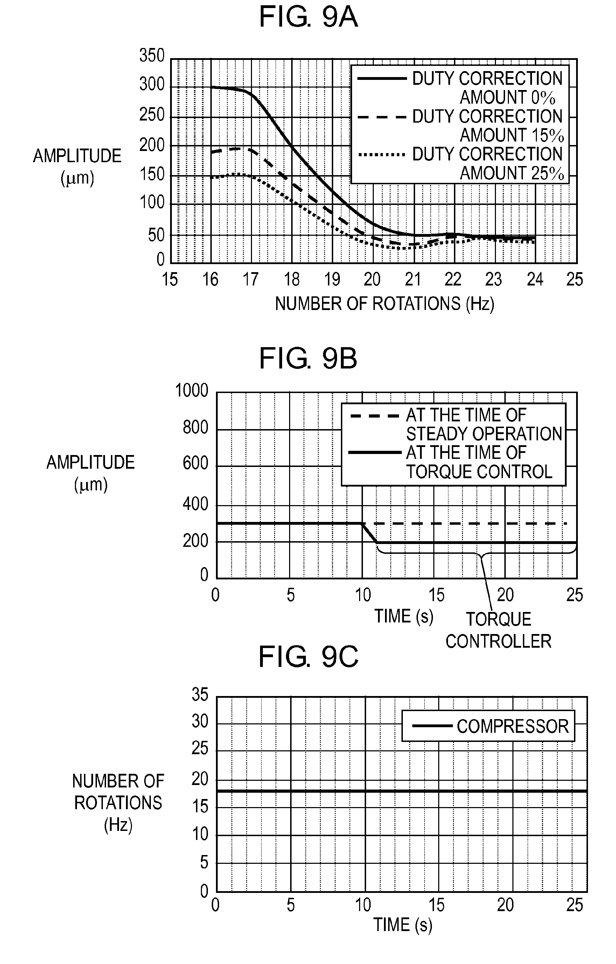

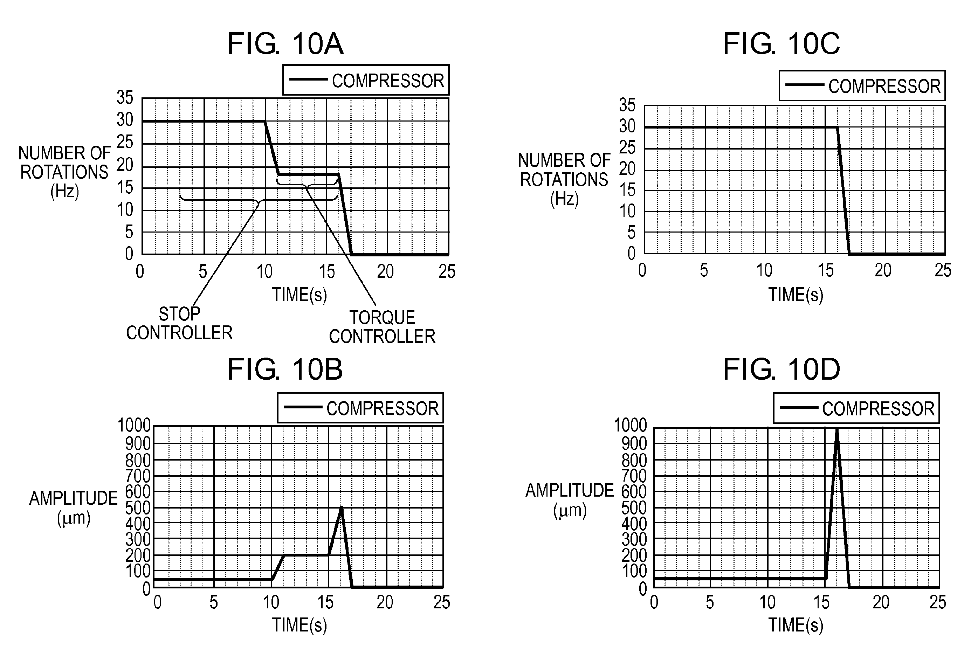

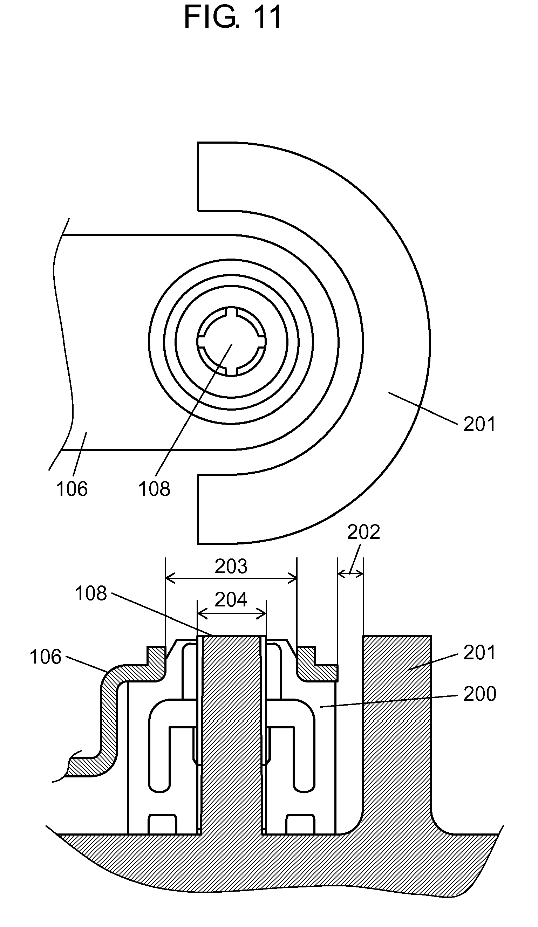

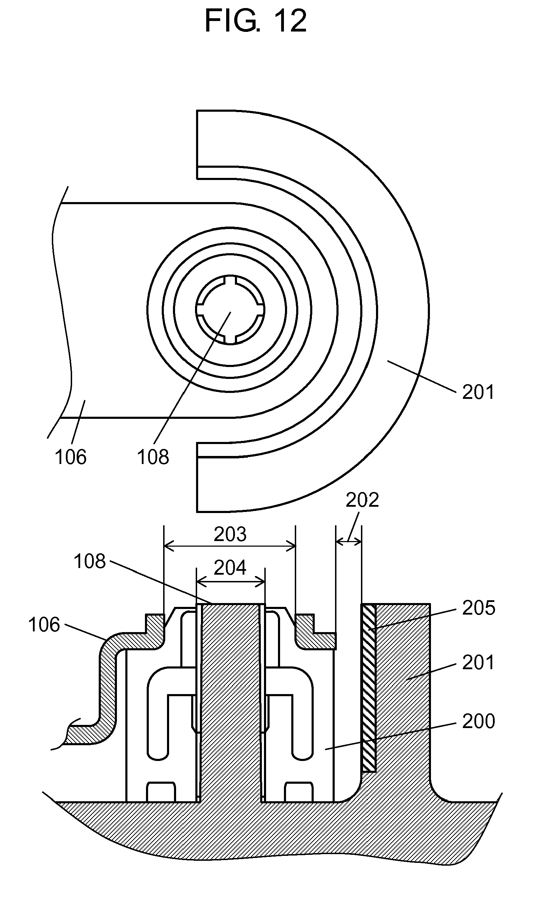

FIG. 1 is a schematic sectional view of a refrigerator in a first embodiment of the present invention. FIG. 2 is a schematic rear view of the refrigerator in the first embodiment of the present invention. FIG. 3 is a schematic part exploded view of the refrigerator in the first embodiment of the present invention. FIG. 4 is a vertical sectional view of a compressor of the refrigerator in the first embodiment of the present invention. FIG. 5 is a horizontal sectional view of the compressor of the refrigerator in the first embodiment of the present invention. FIG. 6 is a perspective view of a leg portion of the compressor of the refrigerator in the first embodiment of the present invention. FIG. 7 is a circuit diagram of an operation controller of the compressor of the refrigerator in the first embodiment of the present invention. FIG. 8 is a diagram showing an algorithm of duty correction at the time of torque control of the compressor of the refrigerator in the first embodiment of the present invention. FIGS. 9A to 9C are vibration characteristic diagrams at the time of a steady operation of the compressor of the refrigerator in the first embodiment of the present invention. FIGS. 10A to 10D are vibration characteristic diagrams at the time of stop of the compressor of the refrigerator in the first embodiment of the present invention. FIGS. 11 and 12 are vertical sectional views of peripheries of an elastic member of the refrigerator in the first embodiment of the present invention.

The first embodiment of the present invention will be described below based on FIGS. 1 to 12. The same reference marks are allocated to the same configurations as those of the conventional refrigerator which is described in the BACKGROUND ART, and detailed description thereof will be omitted.

In FIGS. 1 to 3, inner box 13 and outer box 14 of box body 1 form a space, heat insulation body 15 is charged, in a foaming manner, into the space, and box body 1 includes a heat insulation wall into which heat insulation body 15 is charged. Inner box 13 is formed by vacuum molding using resin such as ABS. Outer box 14 is formed using a metal material such as a pre-coated steel sheet. Rigid urethane foam, phenol foam or styrene foam is used as heat insulation body 15. If hydrocarbon-based cyclopentane is used as a foam material, this is more preferable for preventing global warming.

Box body 1 is divided into a plurality of heat insulation partitions, and a front surface of box body 1 is provided with door 15a. An upper portion of door 15a is of a pivoted door type and a lower portion of door 15a is of a drawer type. Storage compartment 15b which is divided in a heat insulation manner is composed of refrigerating compartment 2, drawer type switching compartment 16, ice compartment 17, drawer type vegetable compartment 3 and drawer type freezing compartment 4 arranged in this order from above. Switching compartment 16 and ice compartment 17 are arranged side by side. Each of the heat insulation partitions is provided with heat insulating door 15a through gasket 18. Door 15a is composed of a refrigerating compartment pivoted door 5, switching compartment pull-out door 19, an ice compartment pull-out door 20, vegetable compartment pull-out door 6 and freezing compartment pull-out door 7 arranged in this order from above.

Refrigerating compartment pivoted door 5 is provided with door pocket 21 as an accommodating space, and plurality of accommodating shelves 22 are provided in the refrigerator.

Next, details of box body 1 will be described. Outer box 14 of box body 1 is formed by assembling outer shell panel 24, bottom surface panel 25, back surface panel 26 and machine compartment panel 28 while securing sealing performance. Outer shell panel 24 is formed by cutting a deep side of top surface 23 and bending top surface 23 into a U-shape. Machine compartment panel 28 forms concave portion 27. Concave portion 27 is formed in a portion of the assembled box body 1 extending between top surface 23 and back surface 28a. Concave portion 27 protrudes as convex portion 30b toward uppermost accommodating space 29a and second shelf accommodating space 30a. Uppermost accommodating space 29a is divided by uppermost shelf 29 and inner box 13 in the refrigerator. Second shelf accommodating space 30a is divided by second shelf 30 and uppermost shelf 29. Preferably, bottom wall surface 30c of convex portion 30b on the side of the compartment and shelf bottom 30d of uppermost shelf 29 are substantially the same horizontal surfaces.

Bottom surface panel 25 and back surface panel 26 are provided with handles which are dents to which a finger can be hitched.

Inner box 13 is slightly smaller than outer box 14, and a deep portion of a back surface of inner box 13 is dented inward. By incorporating inner box 13 in outer box 14, a space into which heat insulation body 15 is charged in a foaming manner is formed in box body 1. Therefore, heat insulation body 15 is also charged into left and right portions of machine compartment panel 28 in a foaming manner, the heat insulation wall is formed and strength is secured.

Next, a refrigeration cycle will be described. The refrigeration cycle is formed by annularly connecting, to one another, compressor 11, discharge pipe 31, a condenser (not shown), capillary 32 which is a decompressor, a driver (not shown) for removing moisture, evaporator 9 and suction pipe 33. Compressor 11 is disposed on installation surface 28b of concave portion 27. Discharge pipe 31 is connected to compressor 11. The condenser (not shown) is provided on top surface 23 and a side surface of outer shell panel 24, concave portion 27 and bottom surface panel 25. Evaporator 9 is disposed on back surfaces of vegetable compartment 3 and freezing compartment 4, and refrigerator fan 8 is disposed in vicinity of evaporator 9.

Top surface cover 34 is fixed to concave portion 27 through a screw. Compressor 11 provided in concave portion 27, machine compartment fan 34a, the condenser (not shown), the dryer (not shown), discharge pipe 31 and a portion of suction pipe 33 are accommodated in top surface cover 34. An upper portion of top surface cover 34 and top surface 23 are substantially the same flat surfaces. Hence, top 34b of compressor 11 is located lower than top surface 23.

Capillary 32 and suction pipe 33 are copper pipes having substantially the same lengths, and they are welded to each other except their ends so that heat can be exchanged. For decompression, a steel pipe having large internal flow resistance and a thin diameter is used as capillary 32, and an inner diameter of capillary 32 is about 0.6 mm to 1.0 mm. Decompression amount of capillary 32 and a length of capillary 32 are designed by adjusting the decompression amount and the length.

To reduce a pressure loss, a copper pipe having a large diameter is used as suction pipe 33, and its inner diameter is about 6 mm to 8 mm. To secure a length of heat exchanger 35, capillary 32 and suction pipe 33 extend along a serpentine course on the back surface of refrigerating compartment 2. According to this, capillary 32 and suction pipe 33 are set compact and buried in heat insulation body 15 located between inner box 13 and back surface panel 26. One ends of capillary 32 and suction pipe 33 protrude from a rear area of vegetable compartment 3 of inner box 13 and are connected to evaporator 9. The other ends of capillary 32 and suction pipe 33 protrude upward from a notch formed in an edge of installation surface 28b of machine compartment panel 28, and are connected to the dryer (not shown), the condenser (not shown) and compressor 11.

Suction pipe 33 and discharge pipe 31 are provided with U-turn portion 36 in the vicinity of a connection with respect to compressor 11 for providing flexibility of connection. U-turn portion 36 is accommodated in concave portion 27. To lower the density of pipes and to make it possible to visually check pipe connections from behind, the pipe connections are divided on left and right sides of compressor 11 such that the pipe connections face the back surface of compressor 11. According to this, assembling operability and service performance are enhanced.

Next, details of compressor 11 will be described.

With reference to FIGS. 4 to 6, mortar-shaped lower container 101 and reversed-mortar-shaped upper container 102 are formed of rolled steel sheet having a thickness of 2 mm to 4 mm by deep drawing. Lower container 101 and upper container 102 are engaged with each other, and entire peripheries of the engaged portions are welded and connected to each other to form hermetic container 103. Refrigerant 104 is stored in hermetic container 103, and refrigerant oil 105 is stored in bottom of hermetic container 103. Legs 106 are fixed to a lower side of hermetic container 103. Elastic member 200 is loosely fitted over pin 108 provided on concave portion 27 of the refrigerator through elastic member 200 locked to legs 106, thereby fixing a position of hermetic container 103.

Each of legs 106 is elastically supported in hermetic container 103 through support portion 113a which is a support member and spring 114. Distance B between barycenter A of compressor 11 in the vertical direction and abutment surfaces 106a between leg 106 of compressor 11 and elastic member 200 is set shorter than distance C between barycenter A of compressor 11 in the vertical direction and lower end surface 113b of the support member.

If barycenter A of compressor 11 in the vertical direction is located higher than abutment surfaces 106a between leg 106 of compressor 11 and elastic member 200 as in this embodiment, abutment surfaces 106a between leg 106 of compressor 11 and elastic member 200 is located higher than lower end surface 113b of the support member in compressor 11.

A height of elastic member 200 is greater than distance F between lowermost end E of compressor 11 and installation surface 28b of concave portion 27 on which compressor 11 is disposed.

Leg 106 includes fixing surface 106b fixed to hermetic container 103, upwardly rising bent portion 106c, and elastic member installation lower surfaces 106d which lock elastic member 200. Ribs 106e extending at least between two of fixing surface 106b, bent portion 106c and elastic member installation lower surface 106d are provided.

Electric element 110 is composed of rotor 111 and salient-pole concentrated winding stator 112. Compressing element 113 is configured above electric element 110, and is driven by electric element 110.

Electric element 110 and compressing element 113 are accommodated in hermetic container 103 together. Electric element 110 and compressing element 113 are elastically supported by a bottom of lower container 101 and a lower end of stator 112 through spring 114 and support portion 113a which is a support member.

Support portion 113a and spring 114 provided on a lower end of stator 112 are support members which elastically support a machine portion.

Terminal 115 which configures a portion of lower container 101 supplies electricity from outside to electric element 110 through lead wire 116. Hermetic container 103 is provided with discharge tube 120, suction tube 121 and sealing tube 122. Discharge tube 120 is provided for connecting hermetic container 103 to discharge pipe 31 of a refrigerating system. Suction tube 121 is provided for connecting hermetic container 103 to U-turn portion 36. Sealing tube 122 is provided for bringing the refrigerating system into a closed space after charging refrigerant 104 into the refrigerating system.

Refrigerant 104 is sucked into hermetic container 103 through U-turn portion 36 and suction tube 121 by the operation of compressing element 113, and is discharged from discharge pipe 144 into discharge tube 120.

Discharge pipe 144 elastically connects compressing element 113 and discharge tube 120 of hermetic container 103.

Next, details of compressing element 113 will be described.

Shaft 130 includes main shaft portion 131 to which rotor 111 is fixed by press-fitting or shrink fitting, and eccentric portion 132 which is eccentric from main shaft portion 131. Cylinder block 133 includes substantially cylindrical compression compartment 134, and bearing 135 for pivotally supporting main shaft portion 131 of shaft 130. Cylinder block 133 is formed above electric element 110.

Rotor concave portion 111a is formed on the side of compressing element 113 of rotor 111. Bearing 135 extends into rotor concave portion 111a.

Piston 136 is loosely fitted into compression compartment 134, and is connected to eccentric portion 132 of shaft 130 by connecting portion 137. According to this, rotating motion of shaft 130 is converted into reciprocating motion of piston 136. Piston 136 enlarges and contracts a space of compression compartment 134, thereby sucking refrigerant 104 in hermetic container 103 from suction port 141 of suction muffler 140. Thereafter, refrigerant 104 is discharged into discharge pipe 31 existing outside of hermetic container 103 through a valve (not shown) provided in cylinder head 142, discharge muffler 143 formed in cylinder block 133, discharge pipe 144 and discharge tube 120.

Discharge pipe 144 which is a high pressure pipe is a steel pipe having an inner diameter of 1.5 mm to 3.0 mm, and discharge pipe 144 is made flexible using an L-shape or a U-bending. Compressing element 113 and discharge tube 120 of hermetic container 103 are elastically connected to each other.

An operation and an action of the refrigerator configured as described above will be described below.

First, setting of a temperature of each of the heat insulation partitions will be described. A temperature of refrigerating compartment 2 is usually set in a range of 1°C to 5°C as a lower limit temperature at which food is refrigerated but not frozen. The temperature setting of switching compartment 16 can be changed by user's setting, and the temperature can be set to a desired temperature zone from a freezing compartment temperature zone to a refrigerating, vegetable compartment temperature zone. Ice compartment 17 is an independent ice storage compartment, and a temperature thereof is set relatively high as high as -18°C to -10°C.

A temperature of vegetable compartment 3 is often set to 2°C to 7°C which is equal to or slightly higher than that of refrigerating compartment 2. A temperature of freezing compartment 4 is usually set to -22°C to -18°C for frozen storage, but to enhance a state of preservation, the temperature of freezing compartment 4 is set to a lower temperature, e.g., up to -30°C in some cases.

The compartments are divided by the heat insulation walls to efficiently maintain the different set temperatures. The heat insulation wall is formed by charging heat insulation body 15 in between inner box 13 and outer box 14 in the foaming manner. Heat insulation body 15 has sufficient heat insulation performance and secures strength of box body 1.

Next, an operation of the refrigeration cycle will be described. A cooling operation is started and stopped by signals from a temperature sensor (not shown) and a control substrate (not shown) in accordance with a set temperature in the refrigerator. Compressor 11 discharges a high temperature and high pressure refrigerant 104 in accordance with a command instructing to start the cooling operation.

Discharged refrigerant 104 passes through discharge pipe 31, dissipates heat in the condenser (not shown) and is condensed and liquefies, refrigerant 104 is decompressed by capillary 32, and becomes a low temperature and low pressure liquid refrigerant. Thereafter, the liquid refrigerant reaches evaporator 9, the liquid refrigerant in evaporator 9 evaporates and vaporizes, and heat-exchanged cool air is distributed by a damper (not shown). The cooling operation in each of the compartments is carried out in this manner.

Next, an operation of compressor 11 will be described.

If compressor 11 is energized, electricity is supplied from outside to stator 112 of electric element 110 through terminal 115 and lead wire 116. If electricity is supplied to stator 112, rotor 111 rotates by rotating magnetic field generated by stator 112. If rotor 111 rotates, eccentric portion 132 of shaft 130 connected to rotor 111 rotates eccentrically from an axis of shaft 130. The eccentric motion of shaft 130 is converted into reciprocating motion by connecting portion 137 connected to eccentric portion 132. This reciprocating motion becomes reciprocating motion of piston 136 connected to the other end of connecting portion 137. According to this, piston 136 sucks and compresses refrigerant 104 while varying a volume in compression compartment 134.

A volume which is sucked and discharged by piston 136 in compression compartment 134 during one reciprocating motion is called a cylinder volume. Cooling ability of a refrigerator is varied depending upon magnitude of the cylinder volume.

In the refrigerator which carries out the above-described operation, compressor 11 supported by elastic member 200 and leg 106 is provided in concave portion 27 formed between top surface 23 and back surface 28a of the refrigerator. It is necessary that a depth (height) of concave portion 27 is at least equal to or greater than the following four values: a minimum gap between a bottom of lower container 101 of compressor 11 and installation surface 28b; a height of compressor 11; a minimum gap between upper container 102 and top surface cover 34; and a thickness of top surface cover 34.

To avoid contact between compressor 11, installation surface 28b and top surface cover 34, the minimum gap is required. A minimum thickness of top surface cover 34 is determined by strength. Hence the depth (height) of concave portion 27 is determined by the height of compressor 11.

On the other hand, convex portion 30b protrudes by concave portion 27 in the refrigerator. If convex portion 30b is large, accommodating performance of the refrigerator is deteriorated. If refrigerating compartment pivoted door 5 is opened and an interior of refrigerating compartment 2 is viewed, since convex portion 30b protrudes, its appearance becomes poor. Therefore, a technique for lowering the height of compressor 11 is required.

The height of compressor 11 will be described specifically. Steel sheets of 2 mm to 4 mm are used for lower container 101 and upper container 102 of compressor 11, and a total thickness of the containers is about 7 mm. Lower container 101 and upper container 102 have curvatures in the vertical direction. This is for reducing noise steady operation that a living space where the refrigerator is installed can be made comfort. Since the containers have curvatures, rigidity of the containers and eigenvalues are increased, and noise caused by resonance is suppressed. A radius of curvature is about R100 mm to R150 mm. To obtain this curvature, a height of 13 mm or higher is required on each of the upper side and lower side of hermetic container 103.

Next, refrigerant oil 105 is stored in bottom of hermetic container 103. To assure operations under various conditions of compressor 11, about 200 ml to 250 ml of refrigerant oil 105 is charged. For refrigerant oil 105, a height of about 20 mm is required. Further, if refrigerant oil 105 and electric element 110 come into contact with each other, input is abnormally increased. Hence, about 9 mm is required as a space distance for preventing refrigerant oil 105 and electric element 110 from coming into contact with each other.

In the case of a refrigerator in which compressor 11 is provided on top surface 23 of the refrigerator, since a position of compressor 11 comes close to ears of a user, it is more important to suppress noise of compressor 11 to a low level. Hence, it is important to enhance the rigidity of hermetic container 103. To enhance the reliability, it is also important to secure refrigerant oil 105. From these reasons, 49 mm is required as a total size of the following four values: 7 mm of the container' thickness; 13 mm of the container's curvature; 20 mm of the container's curvature and refrigerant oil 105; and 9 mm required for securing the space distance. It is not appropriate to reduce these sizes in terms of characteristics of compressor 11.

Therefore, the height of compressor 11 is substantially determined by electric element 110 and compressing element 113. By making the cylinder volume of compressing element 113 small, piston 136, connecting portion 137, shaft 130 and bearing 135 can be made compact. However, if the cylinder volume becomes small, the refrigerating ability of the refrigerator is lowered. In this embodiment, to obtain higher refrigerating ability with a smaller cylinder volume, electric element 110 is operated with the number of rotations of frequency higher than commercial power source frequency (50 Hz or 60 Hz in Japan). According to this, compressing element 113 is made compact. More specifically, the cylinder volume can be as small as about 30%, a diameter of piston 136 can be small, and a load applied to shaft 130 is also reduced. Hence, a length of bearing 135 which supports the load of shaft 130 can be shortened, and electric element 110 can be configured close to compressing element 113. According to the present inventor's design, compressing element 113 can be made compact by 5 mm to 10 mm by highly rotating electric element 110 using an inverter.

It is not absolutely necessary that inverter type setting of a plurality of numbers of rotations of electric element 110 includes the number of rotations corresponding to frequency higher than the commercial power source frequency (50 Hz or 60 Hz) in Japan.

That is, if the number of rotations is set such that the upper limit of frequency corresponding to the plurality of numbers of rotations of electric element 110 does not exceeds the commercial power source frequency (not limited to Japan), it is possible to expect that an energy-saving effect and a silent effect can be exerted. If the inverter is used as electric element 110 and a thickness of electric element 110 is reduced and electric element 110 is made compact, the cylinder volume of compressing element 113 may not be made compact.

As shown in FIG. 4, hermetic container 103 includes upper container 102 and lower container 101, and plurality of legs 106 fixed to lower container 101 are disposed in concave portion 27 through elastic member 200. Plurality of pins 108 are provided on installation surface 28b of compressor 11 of concave portion 27. By placing elastic member 200 on pins 108, compressor 11 is mounted such that the height of elastic member 200 becomes greater than a distance between installation surface 28b of compressor 11 and a lowermost portion of compressor 11.

Next, an operation controller of compressor 11, and an operation and an effect of the operation controller will be described with reference to FIGS. 7 to 10. Here, the operation controller controls torque and stop of electric element 110 of compressor 11. FIG. 7 is a circuit diagram of the operation controller of the compressor. FIG. 8 is a diagram showing an algorithm of duty correction when torque of the compressor is controlled. With reference to FIG. 7, microcomputer 151 estimates a compression stroke of compressor 11 by position detecting circuit 150 which detects a position of rotor 111 of electric element 110. Based on a result of the estimation, microcomputer 151 carries out duty correction of PWM (Pulse Width Modulation) drive pulse, and controls torque of electric element 110. As shown in FIG. 8, microcomputer 151 varies a duty correction amount in accordance with load torque of compressing element 113 in the compression stroke of compressor 11. According to this, since an angle speed of rotor 111 can be maintained substantially constant, it is possible to reduce a vibration amount of compressor 11.

In recent years, from a standpoint of energy-saving, a driving operation of a compressor with a lower rotation region becomes more important in inverter control of a refrigerator. Hence, it becomes necessary to drive a compressor with the rotation number of 20 Hz or lower which is not used in the conventional technique.

FIGS. 9A to 9C are vibration characteristic diagrams of a compressor when a duty correction amount in inverter type torque control is varied. As shown in FIG. 9A, it can be found that if the number of rotations is 22 Hz or lower, amplitude of vibration abruptly becomes large due to characteristic of 0% duty correction amount. Hence, by controlling torque based on the duty correction, amplitude is reduced remarkably at a low rotation region of about 22 Hz or lower as shown in FIG. 9A. It can be found that the higher the duty correction amount is, the more amplitude of compressor 11 is reduced. As shown in FIG. 9C for example, if the duty correction amount is 15% when the compressor is operated with the number of rotations of 17 Hz, amplitude is reduced from 300 µm to 200 µm by controlling torque as shown in FIG. 9B, and it is possible to reduce amplitude by about 30%. That is, if torque is controlled to reduce pulsation and amplitude of compressor 11, it is possible to reduce amplitude of vibration of legs 106. According to this, it is possible to reduce vibration and noise of compressor 11 and to prevent separation, breaking and cutting of contact portions between elastic member 200 and legs 106.

Although it is described in the embodiment that the operation controller controls torque in the low rotation region of 22 Hz or lower, torque may be controlled in a rotation region of 22 Hz or higher of course.

Next, stop control carried out by the operation controller of compressor 11 will be described with reference to FIGS. 10A to 10D. FIG. 10A shows variation in the number of rotations when the compressor in the first embodiment of the present invention is stopped, and FIG. 10B shows variation in amplitude at that time. FIG. 10C shows variation in the number of rotations when a conventional compressor is stopped, and FIG. 10D shows variation in amplitude at that time.

In FIG. 10A, if stop is controlled when compressor 11 is operated at 30 Hz, the number of rotations of electric element 110 is reduced to an arbitrary number of rotations (18 Hz). If torque control of 25% duty correction amount is carried out for electric element 110 of compressor 11, amplitude (see FIG. 10B) when compressor 11 is stopped becomes about 50% of amplitude (see FIG. 10D) when the conventional compressor is stopped. The compressor is brought into an operation state where amplitude becomes smaller as small as 200 µm, and kinetic energy becomes smaller. If a power source of compressor 11 is turned OFF at this time, amplitude at the time of stop becomes 500 µm as shown in FIG. 10B, and the amplitude becomes about 50% of amplitude (1,000 µm) shown in FIG. 10D when stop of the conventional compressor is not controlled.

The operation controller reduces the number of rotations of compressor 11 in a stepwise manner by the stop control, and reduces pulsation of compressor 11 by the torque control. According to this, by suppressing, to a smaller level, kinetic energy immediately before compressor 11 is stopped, it is possible to reduce amplitude of vibration of legs 106 when compressor 11 is stopped. Hence, it is possible to prevent separation, breaking and cutting of contact portions between elastic member 200 and legs 106.

In FIG. 11, wall portion 201 is disposed around leg 106 attached to an upper portion of elastic member 200 attached to pin 108 in the horizontal direction. Space distance 202 between leg 106 and wall portion 201 in the horizontal direction is smaller than 1/2 of a difference between inner diameter 203 of a leg hole of leg 106 and outer diameter 204 of pin 108. According to this, even if leg 106 abuts against wall portion 201, since there is a gap between elastic member 200 and pin 108, it is possible to avoid a case where elastic member 200 is sandwiched between leg 106 and pin 108 and elastic member 200 is cut.

In FIG. 12, an inner periphery of wall portion 201 is provided with elastic body 205. Even if leg 106 abuts against wall portion 201, since wall portion 201 is provided with elastic body 205, impact generated at the time of abutment is absorbed.

An operation and an effect of the members around leg 106 of compressor 11 having the above-described configuration will be described below.

In the inverter type compressor 11, it is possible to suppress swing of leg 106 by wall portion 201 in vibration having large amplitude generated during a transient period of start and stop. Hence, stresses of U-turn portion 36 of suction pipe 33 of compressor 11 and discharge pipe 31 are reduced, and it is possible to prevent the pipes from deforming and bending.

In external vibration generated when a refrigerator is transported or when door 15a is opened or closed, it is possible to suppress a vibration amount of leg 106 of compressor 11 to a small level. According to this, since impact applied from leg 106 to pin 108 can be suppressed, it is possible to prevent pin 108 from bending. Further, it is possible to prevent separation, breaking and cutting of contact portions between elastic member 200 and legs 106. Since stresses of U-turn portion 36 of suction pipe 33 of compressor 11 and discharge pipe 31 are reduced, it is possible to prevent U-turn portion 36 and discharge pipe 31 from deforming and bending. Since the abutment of hermetic container 103 of compressor 11 against concave portion 27 can be prevented, it is possible to prevent a vacuum heat insulation material (not shown) accommodated in the heat insulation wall of concave portion 27 from being damaged. Since the inner periphery of wall portion 201 is provided with elastic body 205 as described above, it is possible to enhance reliability and durability of peripheral members of compressor 11.

Since the producing process of refrigerators has a misalignment-preventing effect between legs 106, elastic member 200 and pins 108 when compressor 11 is mounted, it is possible to provide a high-quality refrigerator.

Since the inner periphery of wall portion 201 is provided with elastic body 205, even if leg 106 abuts against wall portion 201, impact generated at the time of the abutment is absorbed. Hence, since an excitation force and noise generated at the time of operation are reduced, it is possible to provide a reliable high-quality refrigerator.

### (Second Embodiment)

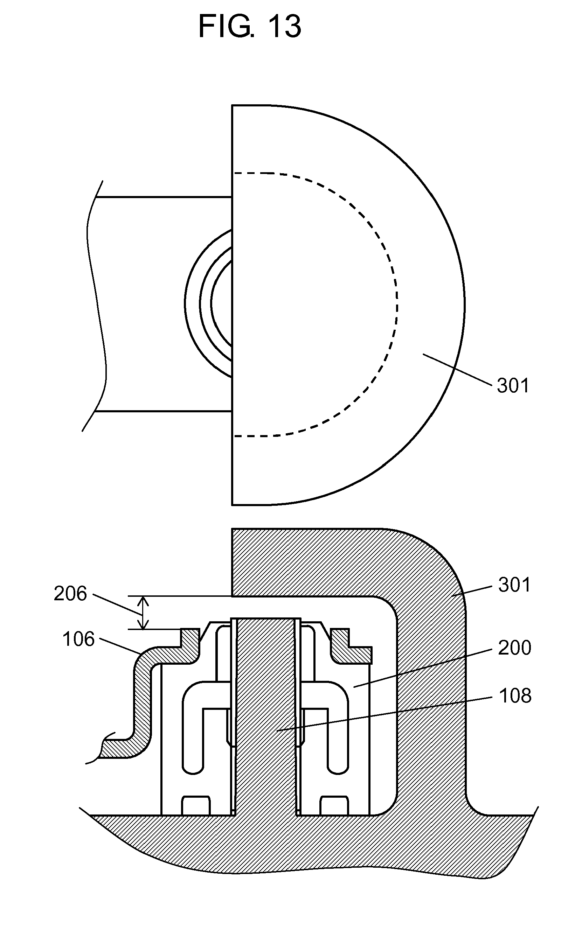

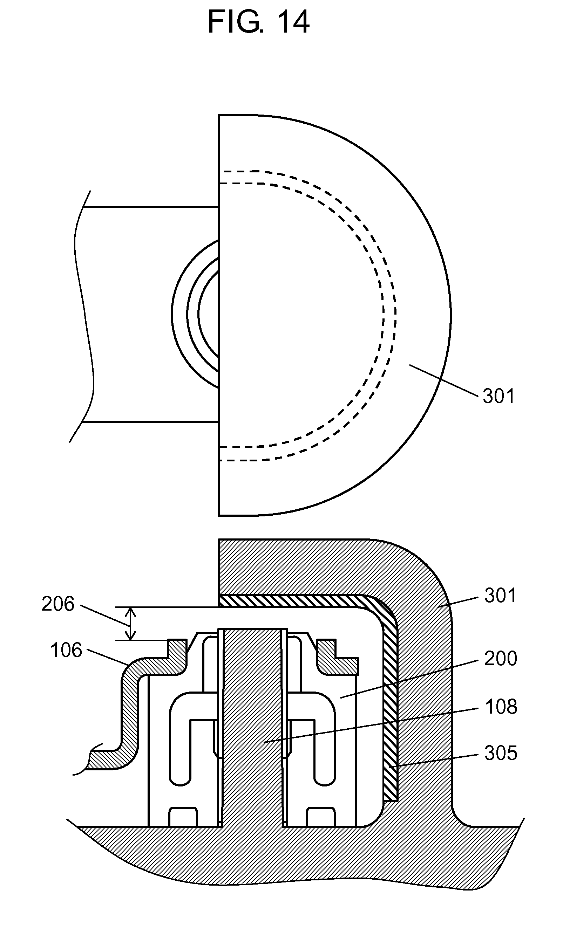

FIGS. 13 and 14 are vertical sectional views of peripheries of an elastic member of a refrigerator in a second embodiment of the present invention.

The same reference marks are allocated to the same configurations as those shown in FIGS. 11 and 12, and detailed description thereof will be omitted.

Although technical ideas, configurations and working effects which are the same as or similar to those of the first embodiment are not described in detail, the same contents are included in the following description unless the technical ideas, the configurations and the working effects do not generate unreasonableness when they are applied to the second embodiment.

In FIG. 13, wall portion 301 is provided vertically above leg 106 through a shock-absorbing space. In FIG. 14, an inner periphery of wall portion 301 is provided with elastic body 305. Even if leg 106 moves in a vertical direction and abuts against wall portion 301, since wall portion 301 is provided with elastic body 305, impact generated at the time of the abutment is absorbed.

An operation and an effect of pin 108 and elastic member 200 having the above-described configuration will be described below.

In external vibration generated when a refrigerator is transported or when door 15a is opened or closed, it is possible to suppress a vibration amount of leg 106 of compressor 11 to a small level. According to this, since impact applied from leg 106 to pin 108 can be suppressed, it is possible to prevent pin 108 from bending. Further, it is possible to prevent separation, breaking and cutting of contact portions between elastic member 200 and legs 106. Since stresses applied to discharge pipe 31 and U-turn portion 36 of suction pipe 33 of compressor 11 are reduced, it is possible to prevent U-turn portion 36 and discharge pipe 31 from deforming and bending. Since the abutment of hermetic container 103 of compressor 11 against concave portion 27 can be prevented, there is an effect that it is possible to prevent a vacuum heat insulation material (not shown) accommodated in a heat insulation wall of concave portion 27 from being damaged. Since the inner periphery of wall portion 301 is provided with elastic body 305, it is possible to enhance reliability and durability of peripheral members of compressor 11.

Since elastic body 305 is provided vertically above the inner periphery of wall portion 301, even if leg 106 moves upward and abuts against wall portion 301, impact generated at the time of the abutment is absorbed. Hence, since an excitation force and noise generated are reduced, it is possible to provide a reliable high-quality refrigerator.

Wall portions 201 and 301 may be separated parts, and according to this configuration also, the same effect can be obtained.

The present invention is effective also for a so-called bottom mount type refrigerator in which a compressor is mounted on a recessed portion which is recessed between a bottom surface and a back surface of a box body, and the same effect can be obtained.

As described above, the refrigerator of the present invention includes the box body, the compressor and the operation controller. A storage compartment provided at its front surface with a door is disposed in the box body. A hermetic container includes an upper container and a lower container. The compressor includes an electric element having a stator and a rotor, and a compressing element driven by the electric element. The electric element and the compressing element are accommodated in the hermetic container. The operation controller controls torque of the compressor or controls stop of the compressor. A plurality of legs fixed to the lower container are disposed on the box body through an elastic member. The elastic member is disposed on a plurality of substantially cylindrical pins provided on a surface of a compressor installation surface of the box body.

According to this configuration, since vibration generated at the time of steady operation or stop of the compressor is suppressed, it is possible to enhance reliability and durability of the compressor and elastic member and pipes which are peripheral members of the compressor. As a result, it is possible to provide a high-quality refrigerator having low noise and small vibration.

In the refrigerator of the present invention, the operation controller controls torque of the electric element in the low rotation region of 22 Hz or lower.

According to this, torque variation of the compressor is reduced and vibration at the time of the steady operation is suppressed. Hence, it is possible to enhance reliability and durability of the compressor, and the elastic member and the pipes which are the peripheral members of the compressor. As a result, it is possible to provide a high-quality refrigerator having low noise and small vibration.

According to the refrigerator of the present invention, the operation controller reduces the number of rotations of the electric element in the stepwise manner.

According to this, vibration when the compressor is stopped is suppressed. Hence, it is possible to enhance reliability and durability of the compressor, and the elastic member and the pipes which are the peripheral members of the compressor. As a result, it is possible to provide a high-quality refrigerator having low noise and small vibration.

In the refrigerator of the present invention, the wall portion is provided around the leg in the horizontal direction, and the leg and the wall portion are disposed through the shock-absorbing space in the horizontal direction.

This configuration suppresses vibration other than steady vibration caused when the compressor is started or stopped or caused by external vibration. Hence, it is possible to enhance reliability and durability of the compressor, and the elastic member and the pipes which are the peripheral members of the compressor. As a result, it is possible to provide a high-quality refrigerator having low noise and small vibration.

In the refrigerator of the present invention, the space distance between the leg and the wall portion in the horizontal direction is smaller than 1/2 of the difference between the inner diameter of the leg hole and the outer diameter of the pin.

This configuration suppresses vibration other than steady vibration caused when the compressor is started or stopped or caused by external vibration. Hence, it is possible to enhance reliability and durability of the compressor, and the elastic member and the pipes which are the peripheral members of the compressor. As a result, it is possible to provide a high-quality refrigerator having small vibration.

The refrigerator of the present invention includes the wall portion in the vertical direction of the leg, and the leg and the wall portion are disposed through the shock-absorbing space in the vertical direction.
This configuration suppresses vibration other than steady vibration caused when the compressor is started or stopped or caused by external vibration. Hence, it is possible to enhance reliability and durability of the compressor, and the elastic member and the pipes which are the peripheral members of the compressor. As a result, it is possible to provide a high-quality refrigerator having low noise and small vibration.

In the refrigerator of the present invention, a portion of the wall portion is provided with the elastic body.

This configuration suppresses vibration other than steady vibration caused when the compressor is started or stopped or caused by external vibration. Hence, it is possible to enhance reliability and durability of the compressor, and the elastic member and the pipes which are the peripheral members of the compressor. As a result, it is possible to provide a high-quality refrigerator having low noise and small vibration.

In the refrigerator of the present invention, the concave portion which is recessed between the top surface and the back surface of the box body and the compressor is disposed in the concave portion.

According to this configuration, even in a so-called top unit type refrigerator, it is possible to suppress vibration other than steady vibration caused when the compressor is started or stopped or caused by external vibration. Hence, it is possible to enhance reliability and durability of the compressor, and the elastic member and the pipes which are the peripheral members of the compressor. As a result, it is possible to provide a high-quality refrigerator having low noise and small vibration.

### INDUSTRIAL APPLICABILITY

As described above, according to the refrigerator of the present invention, the interior of the refrigerator can effectively and conveniently be used, and vibration and noise are reduced. Therefore, the refrigerator can be applied to a machine using a cooling device such as a domestic refrigerator and a professional-use refrigerator.

### REFERENCE MARKS IN THE DRAWINGS

- 1: box body
- 11: compressor
- 15a: door
- 15b: storage compartment
- 23: top surface
- 27: concave portion
- 28a: back surface
- 28b: installation surface
- 101: lower container
- 102: upper container
- 103: hermetic container
- 106: leg
- 108: pin
- 110: electric element
- 111: rotor
- 112: stator
- 113: compressing element
- 200: elastic member
- 201,301: wall portion
- 202: space distance
- 203: inner diameter of leg
- 204: outer diameter of pin
- 205,305: elastic body

## Claims

1. A refrigerator comprising:
a box body including a storage compartment provided with a door at a front side;
a compressor having a hermetic container provided with an upper container and a lower container, and therein accommodating an electric element having a stator and a rotor, and a compressing element driven by the electric element; and
an operation controller for making torque control or stop control of the compressor;
wherein
a plurality of legs fixed to the lower container are disposed on the box body through an elastic member, and
the elastic member is disposed on a plurality of substantially cylindrical pins provided on a surface of a compressor installation surface of the box body.

2. The refrigerator according to claim 1, wherein the operation controller controls torque of the electric element in a low rotation region of 22 Hz or lower.

3. The refrigerator according to claim 1, wherein the operation controller reduces a number of rotations of the electric element in a stepwise manner.

4. The refrigerator according to claim 1, further comprising a wall portion located around the legs in a horizontal direction, wherein the legs and the wall portion are disposed through a shock-absorbing space in a horizontal direction.

5. The refrigerator according to claim 4, wherein a space distance between each of the legs and the wall portion in the horizontal direction is smaller than 1/2 of a difference between an inner diameter of a hole of the legs and an outer diameter of the pins.

6. The refrigerator according to claim 1, further comprising a wall portion located vertically above the legs, wherein the legs and the wall portion are disposed through a shock-absorbing space in a vertical direction.

7. The refrigerator according to claim 4 or 6, wherein the wall portion is provided with an elastic body on a portion thereof.

8. The refrigerator according to claim 1, wherein the box body has a concave portion formed with a recess between a top surface and a back surface thereof, and the compressor is disposed in the concave portion.
